# EUROPEAN PATENT SPECIFICATION

(11) **EP 1 813 076 B1**
(45) Date of publication and mention of the grant of the patent: **04.01.2017**
(21) Application number: 04822634.4
(22) Date of filing: 17.11.2004
(51) Int. Cl.: H04L 29/06, H04W 80/06

(54) **FAST RESUME OF TCP SESSIONS**
SCHNELLE WIEDERAUFNAHME VON TCP-SITZUNGEN
REPRISE RAPIDE DE SESSIONS TCP

(43) Date of publication of application: 01.08.2007
(73) Proprietor: Telefonaktiebolaget LM Ericsson (publ), 164 83 Stockholm (SE)
(72) Inventor: BACKMAN, Jan, S-442 71 Kärna (SE)
(74) Representative: Ericsson
(86) International application number: PCT/EP2004/013054
(87) International publication number: WO 2006/053581

(56) References cited:
- WO-A-03/088622
- WO-A-03/094008
- JIAN-HAO HU ET AL: "FDA: a novel base station flow control scheme for TCP over heterogeneous networks" PROCEEDINGS IEEE INFOCOM 2001, vol. VOL. 1 OF 3. CONF. 20, 22 April 2001 (2001-04-22), XP010538694 ISBN: 0-7803-7016-3
- ALLMAN NASA GLENN/STERLING SOFTWARE V PAXSON ACIRI / ICSI W STEVENS CONSULTANT M: "TCP Congestion Control" IETF STANDARD, INTERNET ENGINEERING TASK FORCE, IETF, CH, April 1999 (1999-04), XP015008364 ISSN: 0000-0003

## Description

### TECHNICAL FIELD

The invention refers to a fast resume method in a TCP/IP based wireless radio communication system comprising a mobile station (MS) and a first router (SGSN1). The method comprises the steps of:
- a host (SERVER) and the mobile station (MS) establishing a TCP/IP connection;
- the host (SERVER) sending a data stream in the form of a sequence of segments (SEG1);
- the segments (SEG1) being transmitted to the mobile station (MS) by the first router (SGSN1);
- the mobile station (MS) sending an acknowledge frame (ACK,SEG1) to the host (SERVER) for every segment (SEG1) received.

The invention also refers to a radio communication system and a router arranged to carry out the method.

### ABBREVIATIONS:

BSC-Base Station Controller
BTS-Base Transceiver Station
EDGE-Enhanced Data rate for Global Evolution
FDD-Frequency Division Duplex
GGSN-Gateway GPRS Support Node
GPRS-General Packet Radio System
GSM-Global System for Mobile Communications
GTP-GPRS Tunneling Protocol
GTPv0-GPRS Tunnelling Protocol for 2G and 2,5G
GTPv1- GPRS Tunnelling Protocol for 3G
IP-Internet Protocol
ISC-Inter System Change
ISRAU-Inter SGSN Routing Area Update
SGSN-Master Switching Center
MS-Mobile Station
MSS-Maximum Segment Size
MTU-Maximum Transfer Unit
PDP-Packet Data Protocol
QoS-Quality of Service
RAU-Routing Area Update
RLC- Radio Link Control
RNC- Network Control
ROHC-Robust Header Compression
RTT-Round Trip Time
SGSN-Serving GPRS Support Node
SNDCP-Sub Network Dependent Convergence Protocol
TCP-Transmission Control Protocol
TDD-Time Division Duplex
UMTS-Universal Mobile Telecommunications System
UTRAN- UMTS Terrestrial Radio Access Network
VJ-HC-Van Jacobsen header Compression
WCDMA- Wide band Code Division Multiple Access
WLAN-Wireless Local Area Network

### BACKGROUND ART

In the field of data communication for wireless networks, TCP is used as a connection oriented protocol that fragments and reassembles a byte stream into discrete messages or packets. Furthermore, IP-protocols are used in the next lower layer for delivering IP-packets, e.g. by packet routing.

The TCP service is obtained by having both a host (hereinafter also called SERVER) and a client (hereinafter also called mobile station or MS) create end points called sockets. Each socket has a number (address) comprising an IP address of the host and a 16-bit number local to that host, called a port.

To obtain TCP service a connection must be established between a socket on the SERVER, and a socket on the MS. A socket may be used for multiple connections at the same time. Every byte on a TCP connection has its own 32-bit sequence number used both for acknowledgements and for a window mechanism, which use a separate 32-bit header field.

The sending and receiving TCP entities exchange data in the form of segments. A segment consists of a fixed 20-byte header (plus an optional part) followed by zero or more data bytes. The TCP software decides how the segments should be. It can accumulate data from several writes into one segment or split data from one write over multiple segments. Two limits restrict the segment size. Firstly, each segment, including the TCP header, must fit in the maximum of 65535 byte IP payload. Secondly, each network has a maximum transfer unit MTU, and each segment must fit in the MTU.

In the field of wireless communication there is a certain router in the interface between a land line bound network and the wireless network, The wireless network may comprise MS:s in the form of mobile telephones for mobile telephone services, or mobile telephones or computers for data communication. The wireless network may be in the form of the so called 2G or 2.5G standard for the use of, for example, GSM or EDGE. The wireless network may also be in the form of the so called 3G standard (the lu interface) for the use of, for example, WCDMA.

In the present GPRS standard the router is labelled SGSN, which is a node in a GPRS infrastructure that is responsible for the delivery of data packets from and to the mobile stations within its service area. Its tasks include packet routing and transfer, mobility management (attach/detach and location management), logical link management, and authentication and charging functions. The location register of the SGSN stores location information and user profiles of all GPRS users registered with this SGSN as of June 2001.

The basic protocol used by TCP entities uses a sliding window protocol. When a sender transmits a segment, it also starts a timer. When the segment arrives at the destination, the receiving TCP entity sends back a segment (with data if any exists, otherwise without data) bearing an acknowledgement number equal to the next sequence number it expects to receive. If the timer goes off before the acknowledgement is received, the sender retransmits the segment again.

The TCP protocol considers all lost packets as congestion in the network. This means that packets lost due to other reasons, for example momentarily lost connection between the MS and the router, are treated as congestion. Retransmission of packets is based on long time-outs if no active TCP acknowledgements (ACK) are received. This means that the active acknowledgements are necessary to get fast resumes of TCP sessions.

In a TCP based system a duplicate ACK is used to signal that a segment (for example segment 1) has not been received by the MS and what segment is expected. The duplicate ACK is generated in the MS when a subsequent segment (for example segment 2) is received by the MS. Furthermore, three duplicate ACKSs signal that there still is a flow of information since three duplicate ACKs give the information that three subsequent segments (segments 2-4) are received by the MS before the lost segment (segment 1). When three duplicate ACKs have been received, this is a signal that a fast retransmission shall be made.

In a computer network comprising a wireless radio network the MSs connected to the network may move between different cells. In a GPRS based system, each cell or a number of cells are operated by the SGSN.

When a MS moves within the cell or between cells during a call a handover is made between the MS and the SGSN. For example, the BSC connects traffic channels between the BTS and the SGSN, employing a pool of voice coders that can be connected to the switch in the BSC. The BSC also performs the required switching during a call in progress, as the mobile moves from one cell to another within a BSC service area.

Ordinarily, an SGSN must continuously keep track of (or be able to find out) which section of its own service area a called mobile is in. It must also be capable of switching to another SGSN whenever a mobile moves to a cell in another SGSN service area during an ongoing call.

In GPRS the link is temporarily down when the MS is outside radio coverage, or when handover is in progress, for example when a cell change is done, or when an SGSN change is done. When the link is temporarily down, a packet (segment) may be lost.

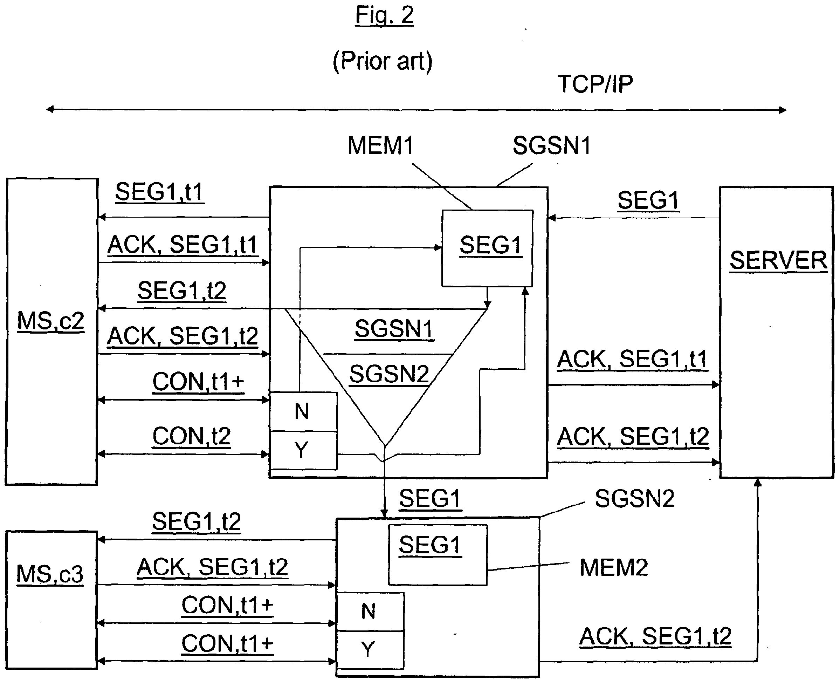

A previously known method to get fast resumes after a radio outage (connection failure between the MS and the SGSN) comprises the step of storing the latest TCP packet sent towards the MS (downlink) in the SGSN for the purpose of retransmission when contact between the MS and the radio link (SGSN) has been re-established. This means that the MS, upon reception of the resent TCP packet, will send another TCP ACK for the same packet which in turn means that the TCP sender (SERVER) receives a duplicate ACK. The TCP protocol handles the duplicate ACK as an indication that a TCP packet is lost since the same packet is acknowledged if a later packet but not the next frame is received. This method will be explained further in connection to figure 2.

The drawback with the above described system is that an entire IP frame needs to be stored for every session. There is no way of knowing if a specific session is going to be stalled due to link outage. Since a TCP frame can be up to 1500B long, the amount of data stored per MS then becomes a bottleneck for the SGSN.

Another disadvantage is that one RTT (Round Trip Time) is performed before TCP session is resumed.

The current implementation in the SGSN is based on queuing of packets. All packets that are not possible to send are stored until they can be sent. This means that resent packets are queued at the back end of this queue, wherein the TCP algorithm risks to time out and to do retransmissions while waiting for the previously queued packets to be sent.

When performing ISRAU (Inter System Routing Area Update), the SGSN is changed. For this scenario the current standard proposes that queued packets are forwarded to the new SGSN, but there still remains the problem with TCP timeout to get TCP retransmission.

Therefore, there is a need for an improved communication system comprising a wireless network and a land line based network, which enables a better method for handling the problem occurring when an MS looses contact with the router, for example the SGSN, during a short time period, for example during a handover.

Prior art document "FDA: A Novel Base Station Flow Control Scheme for TCP over Heterogeneous Networks; Jian-Hao Hu and Kwan L. Yeung, Department of Electrical and Electronic Engineering, The University of Hong Kong, Hong Kong, PRC., IEEE infocom 2001 shows a proactive base station flow control algorithm, called Forced Duplicate Acknowledgement (FDA), is proposed for extending TCP over wireless networks. FDA is implemented at the base station (BS) of a wireless network. In FDA, if the average occupied buffer size at a BS exceeds a pre-defined threshold, an incipient congestion is detected. Then three forced duplicate ACKs, functioning as a congestion notification, will be generated by the BS and forwarded to a set of selected TCP senders. Upon receiving the forced duplicate ACKs, a sender reduces its transfer rate as a result of performing the fast retransmit procedure. To prevent multiple packet dropping due to buffer overflow at the BS, a quality guaranteed cache release policy is provided. The idea is to make room for the on-the-fly packets by releasing some cached but not-yet-acknowledged packets at the BS in advance.

This document forms the preamble of claim 1.

Prior art document RFC2581 discloses in 3.2 - Fast Retransmit/Fast Recovery - that a TCP receiver should send an immediate duplicate ACK when an out-of-order segment arrives. The purpose of this ACK is to inform the sender that a segment was received out-of-order and which sequence number is expected. The fast retransmit algorithm uses the arrival of 3 duplicate ACKs (4 identical ACKs without the arrival of any other intervening packets) as an indication that a segment has been lost. After receiving 3 duplicate ACKs, TCP performs a retransmission of what appears to be the missing segment, without waiting for the retransmission timer to expire.

Prior art document WO03094008 shows a method for communicating data with a packet based protocol over a network. The packet-based protocol is employed to send a set of packets over the network towards a destination. Each packet can include instructions for the destination to provide an acknowledgement indicating every received packet in the set. If the acknowledgement for receiving at least one of the packets in the set is delayed, the set of packets is extended to include another packet. Periodically, at least the other packet is sent towards the destination until another acknowledgement is received indicating that at least the other packet is received by the destination. The acknowledgement of the other packet in the extended set is employed to provide information identifying each un-received packet in the extended set. This identification information is employed to periodically resend at least one un-received packet in the extended set until the destination acknowledges receiving each resent packet in the extended set.

Prior art document WO03088622 relates to a method and system for managing a communication between a first mobile network element and a second network element, wherein the communication is performed via a network on a packet-switched basis with acknowledgment messages acknowledging receipt of packets being returned to the packet sending network element. A congestion control is provided for controlling the number of packets being allowed to be sent before receipt of acknowledgment messages for these packets. The congestion control is adapted to change, when the first network element performs a hand-over and sends a message informing on the hand-over, so as to provide faster recovery rate after handover as compared to the normal recovery rate after packet loss.; At least one of the first and second network element is adapted, when receiving the message, to trigger the invocation of a fast retransmit and fast recovery algorithm. This document however, shows no observation of the connection between a mobile station and a router.

### DISCLOSURE OF INVENTION

The invention intends to remedy the above described problems.

The invention refers to a method and an arrangement according to the appended claims.

One aspect of the method according to an embodiment of the invention refers to a router in the form of an anchor point arranged to store the necessary information about the last TCP ACK that was sent from the MS. When the link over the air interface is available again and the TCP session shall be restarted, the stored TCP ACK is recreated and transmitted back to the SERVER by the router. This will trigger a fast retransmit algorithm in the TCP SERVER and thereby the session is restarted. According to the present TCP standard, the TCP ACK shall be transmitted three times back to the SERVER in order to activate the fast retransmit algorithm and thus a fast recovery of the TCP session. According to the invention, the router thus transmits the stored TCP ACK three times in order to activate the fast retransmit.

The main benefit of the invention lies in that it requires a minimum of data to be stored per TCP session. Less than 40B per session is needed compared to the previously known method where 1500B is stored per session. These 40B can be reduced further by only storing delta information like done in the TCP/IP header compression, for example VJ-HC or ROHC. Both the schemes store the same kind of information that is needed for TCP ACK:s to be able to reconstruct compressed packets from the air interface. The relevant information in a TCP ACK is source and destination IP addresses, source and destination TCP port, the negotiated TCP window size and the sequence number as well as the acknowledged serial number. This is a total of 22B, but may be further reduced, for example, by reusing the IP address stored for the current PDP-context that normally is the same as the MS IP address.

Data structures for TCP/IP header compression can be reused for also storing TCP ACK information, which means that the actual memory footprint can be very limited if combined with TCP/IP header compression.

Another advantage is that an entire round trip time period RTT towards the MS is gained from the router. The previously known method initiates the retransmission from a TCP sender towards a MS by the SGSN resending a stored packet to the MS that, upon receipt of the resent packet, sends a duplicate TCP ACK to the TCP payload sender. This means that the long delay air interface (compared to the delay towards a fixed network server) is used twice delaying the actual retransmission from the TCP transmitter. By storing and sending the duplicate ACK directly from the SGSN towards the TCP transmitter, the RTT of the radio interface is gained.

Yet another benefit is that by not sending stored TCP packets (that might be dropped or might be duplicates of each other) over the radio interface, those resources can be used for other packets giving better radio utilization.

The inventive method is especially advantageous when handling outages in a handover procedure.

There is a plurality of handover scenarios which below will be explained further in connection to the appended drawings.

In one embodiment of the invention the router is a SGSN or a GGSN in a GPRS based system. In another embodiment the router is a home agent or a GGSN in a W-LAN system.

### BRIEF DESCRIPTION OF DRAWINGS

The invention will below be described in further details in connection to a number of drawings, where;
Figure 1 schematically shows a TCP/IP based network according to prior art and the present invention;
Figure 2 schematically shows a flow chart for retransmission according to prior art, and where;
Figure 3 schematically shows a flow chart for retransmission according to one embodiment of the invention.

### EMBODIMENTS OF THE INVENTION

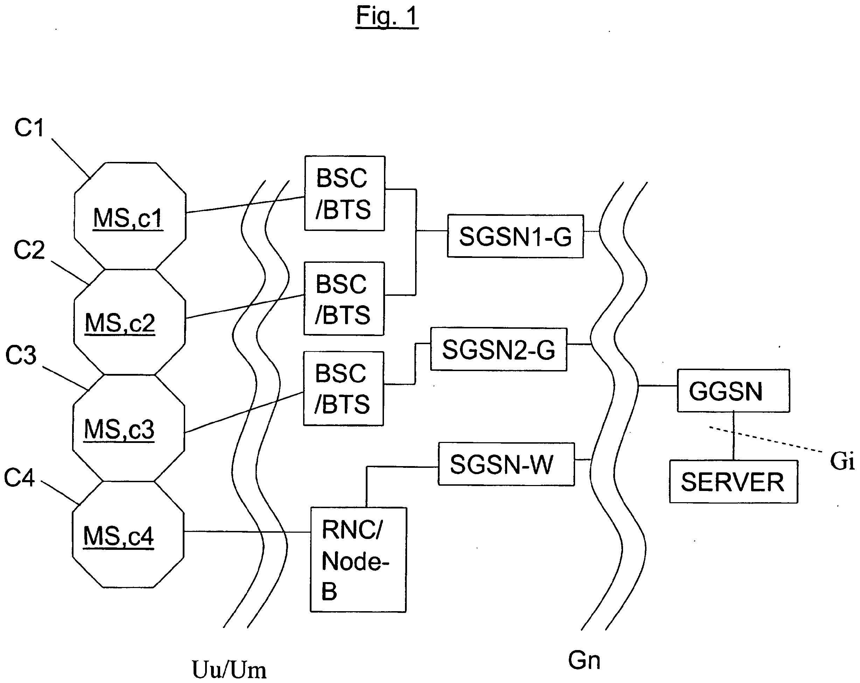

Figure 1 schematically shows a TCP/IP based network in a GPRS standard according to prior art. The network comprises a landline based network and a first and a second wireless radio network. The land line based network comprises a host in the form of a SERVER and a GGSN and a SGSN. The first radio network comprises a BSC, a BTS and an MS. The first radio network is based on GSM or EDGE and uses an SGSN in the form of SGSN-G. The second radio network comprises an RNC, a Node B and a client in the form of an MS. The second radio network is based on WCDMA and uses an SGSN in the form of SGSN-W. The interface between the GGSN and the SGSN is called Gn and the interface between the MS and the BTS in the first radio network is called Uₘ and the interface between the MS and the Node-B in the second radio network is called Uᵥ. The interface between the GGSN and the SERVER is called Gᵢ.

The GGSN refers to a gateway GPRS support node acting as an interface between the GPRS backbone network and the external packet data networks (radio network and the IP network). It converts the GPRS packets coming from the SGSN into the appropriate packet data protocol (PDP) format (e.g. IP) and sends them out on the corresponding packet data network. In the other direction, PDP addresses of incoming data packets are converted to the GSM address of the destination user. The readdressed packets are sent to the responsible SGSN. For this purpose, the GGSN stores the current SGSN address of the user and his or her profile in its location register. The GGSN also performs authentication and charging functions towards external systems, whereas SGSN performs GSM authentication.

The function of the SGSN is as a router in the interface between the wireless network and the land line based network and has been explained above.

WCDMA technology is used for UTRAN air interface. UMTS WCDMA is a Direct Sequence CDMA system where user data is multiplied with quasi-random bits derived from WCDMA Spreading codes. In UMTS, in addition to channelisation, Codes are used for synchronisation and scrambling. WCDMA has two basic modes of operation: Frequency Division Duplex (FDD) and Time Division Duplex (TDD).

The functions of the Node-B are:
- Air interface Transmission / Reception
- Modulation / Demodulation
- CDMA Physical Channel coding
- Micro Diversity
- Error Handing
- Closed loop power control

The functions of the RNC are:
- Radio Resource Control
- Admission Control
- Channel Allocation
- Power Control Settings
- Handover Control
- Macro Diversity
- Ciphering
- Segmentation / Reassembly
- Broadcast Signalling
- Open Loop Power Control

EDGE (Enhanced Data rates for Global Evolution) is a 3G technology that delivers broadband-like data speeds to mobile devices. It allows consumers to connect to the Internet and send and receive data, including digital images, web pages and photographs, three times faster than possible with an ordinary GSM/GPRS network.

The invention refers essentially to the, so called, general packet radio system (GPRS). The GPRS of today has an MTU of 1500B (1500 Bytes). The GPRS is implemented as a virtual link between the MS and the GGSN with 1500 MTU at both ends. Between the SGSN and the GGSN the link is realised as a tunnel over a GTP protocol that adds 40B-48B depending on GTP version. GPRS Tunneling Protocol (GTP) is the protocol used between SGSN and GGSN to tunnel various data protocols through the GPRS backbone. In addition to supporting GTPvO for 2.5G (GPRS), this feature allows the GGSN to be UMTS R99 compliant with respect to the GTP protocol (called GTPv1 per the 3GPP R99/UMTS standards specification).

Concentration is performed in the air interface between the MS and the BSC or RNC, because the number of traffic channels is limited. The BSC or RNC connects traffic channels between the BTS or Node-B and the corresponding SGSN-G or SGSN-W, employing a pool of voice coders that can be connected to the switch in the BSC or RNC. The BSC or RNC also performs the required switching during a call in progress, as the mobile moves from one cell to another within a BSC service area.

Figure 1 shows the MS in four different positions each position being in a different cell C1-C4, this is indicated in the figure as an index to the MS. For example, MS,c1 refers to the MS being in cell 1. In figure 1 C1 and C2 are governed/managed/controlled by SGSN1-G via two BCS/BTS, and C3 is managed by SGSN2-G via one BSC/BTS, and C4 is managed by SGSN-W via one RNC/Node-B. When the MS moves between the different cells C1-C4 different types of handover occurs.

When the MS moves within the cell C1, C2, C3 or C4, there is an intra-cell handover, i.e. a RAU, due to a new channel being selected in the actual cell due to, for example, interference or other disturbance on the channel being used by the MS. In the case of GSM, the resultant re-switching only involves one BSC/BTS and the SGSN1-G.

When the MS moves from C1 to C2 there is an intra-SGSN1-G handover, i.e. a RAU: A new channel is selected in cell C2 managed by another BSC/BTS but by the same SGSN1-G. In the case of GSM, the resultant re-switching involves two BSCs and one SGSN.

When the MS moves from C2 to C3 there is an inter-SGSN handover, .i.e. an ISC or ISRAU, between SGSN1-G and SGSN2-G: A new channel is selected in cell C3 managed by SGSN2-G in the same mobile network. The resultant reswitching involves several SGSNs.

When the MS moves from C3 to C4 there is an inter-system handover.i.e. an ISC or ISRAU, between SGSN1-G and SGSN-W: A new channel is selected in C4 which is managed by another mobile network than the network managing C3. In figure 1, the mobile network managing C3 is a GSM based system comprising an SGSN-G, a BSC and a BTS. The mobile network managing C4 is a WCDMA based system comprising a SGSN-W, an RNC and a Node-B. The two mobile networks have intra communication enabling the MS to communicate with the SERVER.

The RNC is more capable of performing certain tasks than the BSC. The RNC is more capable than the BSC since the RNC is capable of LLC encryption, header compression, payload compression, etc. In a GSM-GPRS system, this is done in the SGSN.

Another inter-system handover .i.e. an ISC or ISRAU, scenario occurs when the MS moves from C3 to C4, and a new channel is selected in a cell managed by another mobile network than the network the MS and the SERVER mainly belongs to. The two mobile networks have intra communication enabling the MS to communicate with the SERVER.

Figure 2 schematically shows a flow chart for retransmission according to prior art. The same denotations in figure 1 and 2 refer to the same object. A TCP/IP connection has been established and the SERVER sends a segment SEG1 comprising the necessary headers and a payload of information. The SEG1 is transmitted to an SGSN1 and stored in a memory MEM1 in the SGSN1. The SGSN1 refers to the SGSN1-G in figure 1, but may be another SGSN, for example an SGSN-W. The SGSN1 then forwards the SEG1 at the time of t1, hence the denotation SEG1,t1, to an MS,c2, i.e. an MS in a second cell C2. When the MS,c2 has received the SEG1,t1, the MS,c2 sends an acknowledgement ACK,SEG1,t1 to the SGSN1. The ACK,SEG1,t1 is then forwarded by the SGSN1 to the SERVER.

Below follows two scenarios in case of loss of contact between the MS and the SGSN1.

### Scenario 1:

The SGSN1 continuously gets information from a suitable part of the system wheter there is radio contact between MS,c2 and the BTS/BSC, and thus ultimately a TCP/IP connection between the SERVER and the MS via the SGSN1 and the GGSN. Such suitable part may for example be the BSC or the RNC. The information may contain information on which type of handover that has occurred, for example RAU, ISRAU, ISC, and may contin a request from a second involvled party that a handover shall be made, or that an inter cell resume shall be made, etc. In figure 2 this is depicted by a check for contact CON at CON,t1+, where t1+ is a point in time after t1 but before a later point of time t2. In figure 2, there is no (N as in no) contact at the time of t1+. In scenario 1, the MS has moved from C2 to C3. The cell C3 is managed by SGSN2 which refers to the SGSN2-G in figure 1, but may be another SGSN, for example an SGSN-W. In figure 2, there is contact (Y as in yes) between MS,c3 and SGSN2 at t1+. This information is transmitted from the SGSN2 to the SGSN1 to trigger an algorithm where the SGSN1 forwards the SEG1 from MEM1 to a memory MEM2 in the SGSN2. The SGSN2 transmits the SEG1 to the MS,c3 at the time of t2, hence the denotation SEG1,t2. When the MS,c3 has received the SEG1,t2, the MS,c3 sends an acknowledgement ACK,SEG1,t2 to the SGSN2. The ACK,SEG1,t2 is then forwarded by the SGSN2 to the SERVER.

### Scenario 2:

The SGSN1 continuously gets the above described information whether if there is radio contact or not. In figure 2 this is depicted by a check for contact CON at CON,t1+, where t1+ is a point in time after t1 but before a later point of time t2. In figure 2, there is no (N as in no) contact at the time of t1+. In scenario 2 the MS has not moved to C3 so there is no contact between the MS and the SGSN2. However, at the point in time t2, the MS,c2 has resumed contact (Y as in yes) with the SGSN1. The SGSN1 then transmits the SEG1 from MEM1 at t2, hence the denotation SEG1,t2, to the MS,c2. When the MS,c2 has received the SEG1,t2, the MS,c2 sends an acknowledgement ACK,SEG1,t2 to the SGSN1. The ACK,SEG1,t2 is then forwarded by the SGSN1 to the SERVER.

In both the above scenarios, the SERVER has received two identical acknowledgements at two different points in time t1 and t2. The SERVER has then received a double acknowledgement which according to the present TCP standard gives information that a segment is lost.

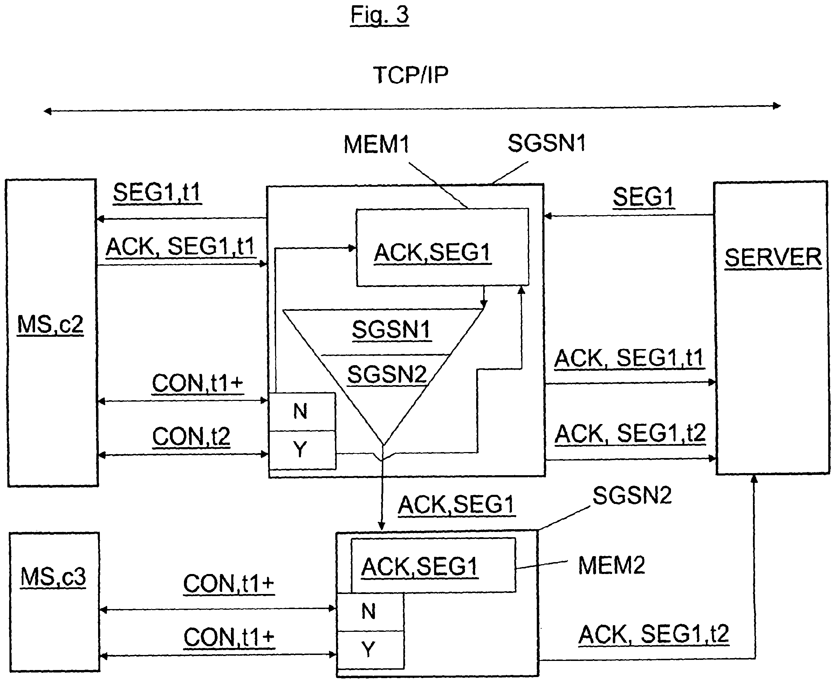

Figure 3 schematically shows a flow chart for retransmission according to one embodiment of the invention. The same denotations in figure 1, 2 and 3 refer to the same object. A TCP/IP connection has been established and the SERVER sends a segment SEG1 comprising the necessary headers and a payload of information. The SEG1 is transmitted to an SGSN1 and is then forwarded by the SGSN1 to the MS1,c2. The SGSN1 refers to the SGSN1-G in figure 1, but may be another SGSN, for example an SGSN-W. The SGSN1 then forwards the SEG1 at the time of t1, hence the denotation SEG1,t1, to an MS,c2, i.e. an MS in the second cell C2. When the MS,c2 has received the SEG1,t1, the MS,c2 sends an acknowledgement ACK,SEG1,t1 to the SGSN1. The ACK,SEG1,t1 is then forwarded by the SGSN1 to the SERVER. The information in the ACK,SEG1 is also stored in a memory MEM1 in the SGSN1.

Below follows two scenarios in case of loss of contact between the MS and the SGSN1.

### Scenario 1:

The SGSN1 continuously gets information from a suitable part of the system whether there is radio contact between MS,c2 and the BTS/BSC, and thus ultimately a TCP/IP connection between the SERVER and the MS via the SGSN1 and the GGSN. Such suitable part may for example be the BSC or the RNC. The information may contain information on which type of handover that has occurred, for example RAU, ISRAU, ISC, and may contin a request from a second involvled party that a handover shall be made, or that an inter cell resume shall be made, etc. In figure 3 this is depicted by a check for contact CON at CON,t1+, where t1+ is a point in time after t1 but before a later point of time t2. In figure 2, there is no (N as in no) contact at the time of t1+. In scenario 1, the MS has moved from C2 to C3. The cell C3 is managed by SGSN2 which refers to the SGSN2-G in figure 1, but may be another SGSN, for example an SGSN-W. In figure 2, there is contact (Y as in yes) between MS,c3 and SGSN2 at t1+. This information is transmitted from the SGSN2 to the SGSN1 to trigger an algorithm where the SGSN1 forwards the ACK,SEG1 from MEM1 to a memory MEM2 in the SGSN2. The ACK,SEG1,t2 is then forwarded by the SGSN2 to the SERVER.

However, according to the present TCP standard, the ACK,SEG1 shall be transmitted three times back to the SERVER in order to activate the fast retransmit algorithm and thus a fast recovery of the TCP session. According to the invention, the router thus transmits the ACK,SEG1 three times in order to activate the fast retransmit. In the embodiment according to figure 3, SGSN1 may transmit the ACK,SEG1 to the SERVER via the GGSN, based on the information that contact has been established between the SGSN2 and the GGSN, as long as the GTP-tunnel is intact between the SGSN1 and the GGSN. When the GTP-tunnel has been established between the SGSN2 and the GGSN, the SGSN2 takes over and transmits the rest of the ACK,SEG1.

### Scenario 2:

The SGSN1 gets the above described information whether if there is radio contact or not. In figure 3 this is depicted by a check for contact CON at CON,t1+, where t1+ is a point in time after t1 but before a later point of time t2. In figure 2, there is no (N as in no) contact at the time of t1 +. In scenario 2 the MS has not moved to C3 so there is no contact between the MS and the SGSN2. However, at the point in time t2, the MS,c2 has resumed contact (Y as in yes) with the SGSN1. The SGSN1 then transmits the ACK,SEG1 from MEM1 at t2, hence the denotation ACK,SEG1,t2, to the SERVER. Furthermore, not shown in figure 3, the SGSN1 transmits another two duplicate ACKS, i.e. ACK,SEG1 is transmitted three times to the SERVER at three different points in time, t2, t3 and t4.

In both the above scenarios, the SERVER has received four identical acknowledgements at four different points in time The SERVER has then received enough duplicate acknowledgments in order to trigger the fast resume algorithm according to the TCP/IP standard.

According to one embodiment of the invention, for cell updates and RAU, the SGSN retransmits the last TCP ACK, i.e. ACK,SEG1 towards the GGSN to provoke TCP retransmission from the Gi. All downlink packets, except the last, queued in the SGSN shall be dropped. During payload initiated paging of a mobile, queued packets shall not be dropped since these packets are solving another problem and no TCP performance gains would therefore be achieved by dropping the packets.

In an ISRAU scenario the interface Gn between a plurality of SGSN:s is used for forwarding new packets from the GGSN, but queued packets should be dropped. One reason for doing this is that packets that are received after the new SGSN (In figure 3, SGSN2), via the GGSN, has contacted the old SGSN (In figure 3, SGSN1) can be considered as new/fresh and can thus increase the TCP performance. Another reason is that when the new SGSN contacts the GGSN in order to move the GTP tunnel, the old SGSN can send the latest TCP ACK, i.e. ACK,SEG1, towards the SERVER. This would make the TCP come into retransmission mode and increase the TCP recovery. The old SGSN will then forward these packets to the GGSN until the GTP tunnel has moved from the old SGSN to the new SGSN. After the GTP tunnel has moved, the old SGSN may forward subsequent segments, received by the old SGSN, to the new SGSN.

The invention is not limited to the above embodiments, but may be varied within the scope of the claims. For example, the invention is not limited to the use of an SGSN, but may use any router in the form of a mobility node in the system. Such mobility node may be the GGSN, or the RNC, or the home agent in a wireless local area network WLAN.

## Claims

1. A fast resume method for a first router (SGSN1) and a second router (SGSN2)
for interacting with a TCP/IP based wireless radio communication system comprising a mobile station (MS) and a host (SERVER);
wherein the host (SERVER) and the mobile station (MS) establishes a TCP/IP connection; and
the host (SERVER) sends a data stream in the form of a sequence of segments (SEG1);
the mobile station (MS) sends an acknowledge frame (ACK, SEG1) to the host (SERVER) for every segment (SEG1) received;
the method comprising the steps of:
- the segments (SEG1) being transmitted to the mobile station (MS) by the first router (SGSN1);
- receiving from the mobile station (MS) an acknowledge frame (ACK, SEG1, t1);
- the first router transmitting an acknowledge frame (ACK, SEG1, t1) to the host (SERVER);
**characterized in that**
- the first router (SGSN1) copying and saving the latest acknowledge frame (ACK, SEG1);
- the first router getting information whether there is contact between the MS and the first router;
- if the first router gets information of a loss of contact between the MS and the first router (CON, t1+),
the method comprising one of the steps
- the first router (SGSN1) retransmitting the copied and saved acknowledge frame (ACK,SEG1, t2) to the host (SERVER) upon re-establishing of contact between the mobile station (MS) and the first router (SGSN1) after an interruption; - the first router repeats (SGSN1) in another two duplicate acknowledge frames (ACK, SEG1, t2) to the host
or;
- the first router (SGSN1) transmitting the copied and saved acknowledge frame (ACK,SEG1) to a second router (SGSN2), the second router stores the acknowledge frame (ACK,SEG1) and retransmits the saved acknowledge frame (ACK,SEG1, t2) to the host (SERVER) when contact has been established between the mobile station (MS) and the second router (SGSN2), - the second router (SGSN2) repeats transmitting the copied and saved acknowledge frame (ACK,SEG1, t2) in another two duplicate acknowledge frames to the host (SERVER).

2. The method according to claim 1, wherein the first router (SGSN1) and / or the second router (SGSN2) transmitting the copied and saved acknowledge frame (ACK,SEG1) in total four times to the host (SERVER).

3. The method according to any previous claim wherein, in case if contact has been established between the mobile station (MS) and the second router (SGSN2),
- the first router not retransmitting the segment (SEG1) being transmitted to the mobile station (MS) to the second router.

4. Method according to any previous claim, wherein the TCP/IP based wireless radio communication system moreover comprises a base station controller, BSC, or a base transceiver station, BTS, and wherein the step - getting information whether there is contact between the MS and the first router - involves whether the MS has radio contact with the BSC/BTS.

5. The method according to any previous claim, with the first router (SGSN1) being an anchor point for the mobile station (MS).

6. The method according to any previous claim applied in a GPRS-system, with the first router (SGSN1) and/or the second router (SGSN2) being a serving GPRS support node, SGSN.

7. The method according to any claim 1 - 5 applied in a wireless local area network, W-LAN, with the first or second router being a home agent or a gateway GPRS support node, GGSN.

8. Method according to claim 6, wherein the - when contact has been established between the mobile station (MS) and the second router (SGSN2) - is due to an inter SGSN handover.

9. A system of a first router (SGSN1) and a second router (SGSN2)
for interacting with a TCP/IP based wireless radio communication system comprising a mobile station (MS), and a host (SERVER);
wherein the host (SERVER) and the mobile station (MS) establishes a TCP/IP connection; and
the host (SERVER) sends a data stream in the form of a sequence of segments (SEG1);
the mobile station (MS) sends an acknowledge frame (ACK, SEG1) to the host (SERVER) for every segment (SEG1) received;
the first router being adapted to:
- the segments (SEG1) being transmitted to the mobile station (MS) by the first router (SGSN1);
- receiving from the mobile station (MS) an acknowledge frame (ACK, SEG1, t1);
- the first router transmitting an acknowledge frame (ACK, SEG1, t1) to the host (SERVER);
**characterized in that**
- the first router (SGSN1) being adapted to copying and saving the latest acknowledge frame (ACK, SEG1);
- the first router being adapted to getting information whether there is contact between the MS and the first router;
- if the first router being adapted to getting information of a loss of contact between the MS and the first router (CON, t1 +),
- the first router (SGSN1) being adapted to retransmitting the copied and saved acknowledge frame (ACK,SEG1, t2) to the host (SERVER) upon re-establishing of contact between the mobile station (MS) and the first router (SGSN1) after an interruption; - the first router repeats (SGSN1) in another two duplicate acknowledge frames (ACK, SEG1, t2) to the host
or;
- the first router (SGSN1) being adapted to transmitting the copied and saved acknowledge frame (ACK,SEG1) to a second router (SGSN2), the second router stores the acknowledge frame (ACK,SEG1) and retransmits the saved acknowledge frame (ACK,SEG1, t2) to the host (SERVER) when contact has been established between the mobile station (MS) and the second router (SGSN2), - the second router (SGSN2) repeats transmitting the copied and saved acknowledge frame (ACK,SEG1, t2) in another two duplicate acknowledge frames to the host (SERVER).

10. System according to claim 9, wherein the first router (SGSN1) and / or the second router (SGSN2) being adapted to transmitting the copied and saved acknowledge frame (ACK,SEG1) in total four times to the host (SERVER).

11. System according to claim 9 or 10, wherein the first router (SGSN1)), in case if contact has been established between the mobile station (MS) and the second router (SGSN2),
- the first router not retransmitting the segment (SEG1) being transmitted to the mobile station (MS) to the second router.

12. System according to any of claims 9 - 11 wherein the TCP/IP based wireless radio communication system moreover comprising a base station controller, BSC or a base transceiver station, BTS, and wherein the step - getting information whether there is contact between the MS and the first router involves whether the MS has radio contact with the BSC/BTS.

13. System according to any of claims 9 - 11, with the first router (SGSN1) being an anchor point for the mobile station (MS).

14. System according to any of claims 9 - 13 according to any previous claim applied in a GPRS-system, with the first router (SGSN1) and/or the second router (SGSN2) being an SGSN.

15. System according to any of claims 9 - 13, applied in a wireless local area network, W-LAN, with the first or second router being a home agent or a GGSN.

16. System according to any of claims 14, wherein the - when contact has been established between the mobile station (MS) and the second router (SGSN2) - is due to an inter SGSN handover.

## Patentansprüche

1. Schnelles Wiederaufnahmeverfahren für einen ersten Router (SGSN1) und einen zweiten Router (SGSN2)
zur Interaktion mit einem TCP/IP-basierten drahtlosen Funkkommunikationssystem, das eine Mobilstation (MS) und einen Host (SERVER) umfasst;
worin der Host (SERVER) und die Mobilstation (MS) eine TCP/IP-Verbindung aufbauen; und
der Host (SERVER) einen Datenstrom in der Form einer Sequenz von Segmenten (SEG1) sendet;
die Mobilstation (MS) für jedes empfangene Segment (SEG1) ein ACK(Rückmeldung)-Teilbild (ACK, SEG1) an den Host (SERVER) sendet;
wobei das Verfahren die folgenden Schritte umfasst:
- die Segmente (SEG1) werden durch den ersten Router (SGSN1) an die Mobilstation (MS) übertragen;
- Empfangen eines ACK-Teilbilds (ACK, SEG1, t1) von der Mobilstation (MS);
- der erste Router überträgt ein ACK-Teilbild (ACK, SEG1, t1) an den Host (SERVER);
**dadurch gekennzeichnet, dass**
- der erste Router (SGSN1) das letzte ACK-Teilbild (ACK, SEG1) kopiert und speichert;
- der erste Router Information beschafft, ob es Kontakt gibt zwischen der MS und dem ersten Router;
- falls der erste Router Information über einen Kontaktverlust zwischen der MS und dem ersten Router (CON, t1+) erhält,
umfasst das Verfahren einen der folgenden Schritte:
- der erste Router (SGSN1) überträgt erneut das kopierte und gespeicherte ACK-Teilbild (ACK, SEG1, t2) an den Host (SERVER) nach dem Neuaufbau des Kontakts zwischen der Mobilstation (MS) und dem ersten Router (SGSN1) nach einer Unterbrechung; - der erste Router (SGSN1) wiederholt dies in zwei weiteren ACK-Teilbild-Duplikaten (ACK, SEG1,t2) an den Host
oder;
- der erste Router (SGSN1) überträgt das kopierte und gespeicherte ACK-Teilbild (ACK, SEG1) an einen zweiten Router (SGSN2), wobei der zweite Router das ACK-Teilbild (ACK, SEG1) speichert und das gespeicherte ACK-Teilbild (ACK, SEG1, t2) erneut an den Host (SERVER) überträgt, wenn der Kontakt zwischen der Mobilstation (MS) und dem zweiten Router (SGSN2) aufgebaut ist, - der zweite Router (SGSN2) wiederholt das Übertragen des kopierten und gespeicherten ACK-Teilbilds (ACK, SEG1, t2) in zwei weiteren ACK-Teilbild-Duplikaten an den Host (SERVER).

2. Verfahren nach Anspruch 1, worin der erste Router (SGSN1) und/oder der zweite Router (SGSN2) das kopierte und gespeicherte ACK-Teilbild (ACK, SEG1) insgesamt viermal an den Host (SERVER) übertragen.

3. Verfahren nach einem der vorhergehenden Ansprüche, worin, falls Kontakt zwischen der Mobilstation (MS) und dem zweiten Router (SGSN2) aufgebaut wurde,
- der erste Router das Segment (SEG1), das an die Mobilstation (MS) übertragen wird, nicht erneut an den zweiten Router überträgt.

4. Verfahren nach einem der vorhergehenden Ansprüche, worin das TCP/IP-basierte drahtlose Funkkommunikationssystem außerdem einen Basisstation-Controller, BSC, oder eine Transceiver- Basisstation, BTS, umfasst und worin der Schritt des Beschaffens von Information, ob es Kontakt zwischen der MS und dem ersten Router gibt, involviert, ob die MS Funkkontakt mit BSC/BTS hat.

5. Verfahren nach einem der vorhergehenden Ansprüche, wobei der erste Router (SGSN1) ein Ankerpunkt für die Mobilstation (MS) ist.

6. Verfahren nach einem der vorhergehenden Ansprüche, in einem GPRS-System angewendet, wobei der erste Router (SGSN1) und/oder der zweite Router (SGSN2) ein Serving-GPRS(allgemeiner Paketfunkdienst)-Unterstützungsknoten, SGSN, ist.

7. Verfahren nach einem der Ansprüche 1 - 5, in einem drahtlosen lokalen Datennetz, W-LAN, angewendet, wobei der erste oder zweite Router ein Heimatagent oder ein Gateway-GPRS- Unterstützungsknoten, GGSN, ist.

8. Verfahren nach Anspruch 6, worin es auf einen Inter-SGSN-Handover zurückzuführen ist, wenn Kontakt zwischen der Mobilstation (MS) und dem zweiten Router (SGSN2) aufgebaut ist.

9. System eines ersten Routers (SGSN1) und eines zweiten Routers (SGSN2)
zur Interaktion mit einem TCP/IP-basierten drahtlosen Funkkommunikationssystem, das eine Mobilstation (MS) und einen Host (SERVER) umfasst;
worin der Host (SERVER) und die Mobilstation (MS) eine TCP/IP-Verbindung aufbauen; und
der Host (SERVER) einen Datenstrom in der Form einer Sequenz von Segmenten (SEG1) sendet;
die Mobilstation (MS) für jedes empfangene Segment (SEG1) ein ACK(Rückmeldung)-Teilbild (ACK, SEG1) an den Host (SERVER) sendet; wobei der erste Router wie folgt angepasst ist:
- die Segmente (SEG1) werden durch den ersten Router (SGSN1) an die Mobilstation (MS) übertragen;
- Empfangen eines ACK-Teilbilds (ACK, SEG1, t1) von der Mobilstation (MS);
- der erste Router überträgt ein ACK-Teilbild (ACK, SEG1, t1) an den Host (SERVER);
**dadurch gekennzeichnet, dass**
- der erste Router (SGSN1) dazu angepasst ist, das letzte ACK-Teilbild (ACK, SEG1) zu kopieren und zu speichern;
- der erste Router dazu angepasst ist, Information zu beschaffen, ob es Kontakt gibt zwischen der MS und dem ersten Router;
- falls der erste Router zum Beschaffen von Information über einen Verlust von Kontakt zwischen der MS und dem ersten Router (CON, t1 +) angepasst ist,
- ist der erste Router (SGSN1) dazu angepasst, das kopierte und gespeicherte ACK-Teilbild (ACK, SEG1, t2) an den Host (SERVER) erneut zu übertragen, nachdem der Kontakt zwischen der Mobilstation (MS) und dem ersten Router (SGSN1) nach einer Unterbrechung neuaufgebaut ist; - der erste Router (SGSN1) wiederholt dies in zwei weiteren ACK-Teilbild-Duplikaten (ACK, SEG1,t2) an den Host
oder;
- ist der erste Router (SGSN1) dazu angepasst, das kopierte und gespeicherte ACK-Teilbild (ACK, SEG1) an einen zweiten Router (SGSN2) zu übertragen, wobei der zweite Router das ACK-Teilbild (ACK, SEG1) speichert und das gespeicherte ACK-Teilbild (ACK, SEG1, t2) erneut an den Host (SERVER) überträgt, wenn der Kontakt zwischen der Mobilstation (MS) und dem zweiten Router (SGSN2) aufgebaut ist, - der zweite Router (SGSN2) wiederholt das Übertragen des kopierten und gespeicherten ACK-Teilbilds (ACK, SEG1, t2) in zwei weiteren ACK-Teilbild-Duplikaten an den Host (SERVER).

10. System nach Anspruch 9, worin der erste Router (SGSN1) und/oder der zweite Router (SGSN2) dazu angepasst sind, das kopierte und gespeicherte ACK-Teilbild (ACK, SEG1) insgesamt viermal an den Host (SERVER) zu übertragen.

11. System nach Anspruch 9 oder 10, worin der erste Router (SGSN1), falls Kontakt zwischen der Mobilstation (MS) und dem zweiten Router (SGSN2) aufgebaut wurde,
- der erste Router das Segment (SEG1), das an die Mobilstation (MS) übertragen wird, nicht erneut an den zweiten Router überträgt.

12. System nach einem der Ansprüche 9 - 1, worin das TCP/IP-basierte drahtlose Funkkommunikationssystem außerdem einen Basisstation-Controller, BSC, oder eine Transceiver- Basisstation, BTS, umfasst und worin der Schritt des Beschaffens von Information, ob es Kontakt zwischen der MS und dem ersten Router gibt, involviert, ob die MS Funkkontakt mit BSC/BTS hat.

13. System nach einem der Ansprüche 9 - 1, wobei der erste Router (SGSN1) ein Ankerpunkt für die Mobilstation (MS) ist.

14. System nach einem der Ansprüche 9 - 13, in einem GPRS-System angewendet, wobei der erste Router (SGSN1) und/oder der zweite Router (SGSN2) ein SGSN ist.

15. System nach einem der Ansprüche 9 - 13, in einem drahtlosen lokalen Datennetz, W-LAN, angewendet, wobei der erste oder zweite Router ein Heimatagent oder ein GGSN ist.

16. System nach Anspruch 14, worin es auf einen Inter-SGSN-Handover zurückzuführen ist, wenn Kontakt zwischen der Mobilstation (MS) und dem zweiten Router (SGSN2) aufgebaut ist.

## Revendications

1. Procédé de reprise rapide pour un premier routeur (SGSN1) et un second routeur (SGSN2), pour interagir avec un système de communication radio sans fil à base de protocole TCP/IP, comprenant une station mobile (MS) et un hôte (SERVER) ;
dans lequel l'hôte (SERVER) et la station mobile (MS) établissent une connexion TCP/IP ; et
l'hôte (SERVER) envoie un flux de données sous la forme d'une séquence de segments (SEG1) ;
la station mobile (MS) envoie une trame d'accusé de réception (ACK, SEG1) à l'hôte (SERVER) pour chaque segment (SEG1) reçu ;
le procédé comprenant les étapes ci-dessous consistant à ou dans lesquelles :
- les segments (SEG1) sont transmis à la station mobile (MS) par le premier routeur (SGSN1) ;
- recevoir, en provenance de la station mobile (MS), une trame d'accusé de réception (ACK, SEG1, t1) ;
- le premier routeur transmet une trame d'accusé de réception (ACK, SEG1, t1) à l'hôte (SERVER) ;
**caractérisé en ce que**
- le premier routeur (SGSN1) copie et enregistre la toute dernière trame d'accusé de réception (ACK, SEG1) ;
- le premier routeur obtient des informations indiquant s'il existe un contact entre la station M S et le premier routeur ;
- si le premier routeur reçoit des informations indiquant une perte de contact entre la station MS et le premier routeur (CON, t1+),
le procédé comporte l'une des étapes ci-dessous dans lesquelles :
- le premier routeur (SGSN1) retransmet la trame d'accusé de réception copiée et enregistrée (ACK, SEG1, t2) à l'hôte (SERVER) suite à un rétablissement de contact entre la station mobile (MS) et le premier routeur (SGSN1) à l'issue d'une interruption ; - le premier routeur répète (SGSN1) cela dans deux autres doublons de trames d'accusé de réception (ACK, SEG1, t2) à l'hôte
ou ;
- le premier routeur (SGSN1) transmet la trame d'accusé de réception copiée et enregistrée (ACK, SEG1) à un second routeur (SGSN2), le second routeur stocke la trame d'accusé de réception (ACK, SEG1) et retransmet la trame d'accusé de réception enregistrée (ACK, SEG1, t2) à l'hôte (SERVER) lorsque le contact a été établi entre la station mobile (MS) et le second routeur (SGSN2) ; - le second routeur (SGSN2) répète la transmission de la trame d'accusé de réception copiée et enregistrée (ACK, SEG1, t2) dans deux autres doublons de trames d'accusé de réception à l'hôte (SERVER).

2. Procédé selon la revendication 1, dans lequel le premier routeur (SGSN1) et/ou le second routeur (SGSN2) transmettent la trame d'accusé de réception copiée et enregistrée (ACK, SEG1) au total quatre fois à l'hôte (SERVER).

3. Procédé selon l'une quelconque des revendications précédentes, dans lequel, si un contact a été établi entre la station mobile (MS) et le second routeur (SGSN2) :
- le premier routeur ne retransmet pas le segment (SEG1) transmis à la station mobile (MS) au second routeur.

4. Procédé selon l'une quelconque des revendications précédentes, dans lequel le système de communication radio sans fil à base de protocole TCP/IP comprend en outre un contrôleur de station de base, BSC, ou une station d'émission-réception de base, BTS, et dans lequel l'étape consistant à obtenir des informations indiquant s'il existe un contact entre la station MS et le premier routeur consiste à savoir si la station MS présente un contact radioélectrique avec la paire BSC/BTS.

5. Procédé selon l'une quelconque des revendications précédentes, dans lequel le premier routeur (SGSN1) correspond à un point d'ancrage pour la station mobile (MS).

6. Procédé selon l'une quelconque des revendications précédentes, appliqué dans un système GPRS, dans lequel le premier routeur (SGSN1) et/ou le second routeur (SGSN2) correspondent à un noeud de support GPRS de service, SGSN.

7. Procédé selon l'une quelconque des revendications 1 à 5, appliqué dans un réseau local sans fil, WLAN, dans lequel le premier routeur ou le second routeur correspond à un agent domestique ou à un noeud de service GPRS de transit, GGSN.

8. Procédé selon la revendication 6, dans lequel la condition « lorsqu'un contact a été établi entre la station mobile (MS) et le second routeur (SGSN2) » est occasionnée par un transfert intercellulaire entre noeuds SGSN.

9. Système d'un premier routeur (SGSN1) et d'un second routeur (SGSN2) pour interagir avec un système de communication radio sans fil à base de protocole TCP/IP, comprenant une station mobile (MS), et un hôte (SERVER) ;
dans lequel l'hôte (SERVER) et la station mobile (MS) établissent une connexion TCP/IP ; et
l'hôte (SERVER) envoie un flux de données sous la forme d'une séquence de segments (SEG1) ;
la station mobile (MS) envoie une trame d'accusé de réception (ACK, SEG1) à l'hôte (SERVER) pour chaque segment (SEG1) reçu ;
le premier routeur étant apte à mettre en oeuvre les étapes ci-dessous ou dans lesquelles :
- les segments (SEG1) sont transmis à la station mobile (MS) par le premier routeur (SGSN1) ;
- recevoir, en provenance de la station mobile (MS), une trame d'accusé de réception (ACK, SEG1, t1) ;
- le premier routeur transmet une trame d'accusé de réception (ACK, SEG1, t1) à l'hôte (SERVER) ;
**caractérisé en ce que**
- le premier routeur (SGSN1) est apte à copier et enregistrer la toute dernière trame d'accusé de réception (ACK, SEG1) ;
- le premier routeur est apte à obtenir des informations indiquant s'il existe un contact entre la station MS et le premier routeur ;
- si le premier routeur est apte à obtenir des informations indiquant une perte de contact entre la station MS et le premier routeur (CON, t1+) :
- le premier routeur (SGSN1) est apte à retransmettre la trame d'accusé de réception copiée et enregistrée (ACK, SEG1, t2) à l'hôte (SERVER) suite à un rétablissement de contact entre la station mobile (MS) et le premier routeur (SGSN1) à l'issue d'une interruption ; - le premier routeur répète (SGSN1) cela dans deux autres doublons de trames d'accusé de réception (ACK, SEG1, t2) à l'hôte
ou ;
- le premier routeur (SGSN1) est apte à transmettre la trame d'accusé de réception copiée et enregistrée (ACK, SEG1) à un second routeur (SGSN2), le second routeur stocke la trame d'accusé de réception (ACK, SEG1) et retransmet la trame d'accusé de réception enregistrée (ACK, SEG1, t2) à l'hôte (SERVER) lorsque le contact a été établi entre la station mobile (MS) et le second routeur (SGSN2) ; - le second routeur (SGSN2) répète la transmission de la trame d'accusé de réception copiée et enregistrée (ACK, SEG1, t2) dans deux autres doublons de trames d'accusé de réception à l'hôte (SERVER).

10. Système selon la revendication 9, dans lequel le premier routeur (SGSN1) et/ou le second routeur (SGSN2) sont aptes à transmettre la trame d'accusé de réception copiée et enregistrée (ACK, SEG1) au total quatre fois à l'hôte (SERVER).

11. Système selon la revendication 9 ou 10, dans lequel le premier routeur (SGSN1), si un contact a été établi entre la station mobile (MS) et le second routeur (SGSN2) :
- le premier routeur ne retransmet pas le segment (SEG1) transmis à la station mobile (MS) au second routeur.

12. Système selon l'une quelconque des revendications 9 à 11, dans lequel le système de communication radio sans fil à base de protocole TCP/IP comporte en outre un contrôleur de station de base, BSC, ou une station d'émission-réception de base, BTS, et dans lequel l'étape consistant à obtenir des informations indiquant s'il existe un contact entre la station MS et le premier routeur consiste à savoir si la station MS présente un contact radioélectrique avec la paire BSC/BTS.

13. Système selon l'une quelconque des revendications 9 à 11, dans lequel le premier routeur (SGSN1) correspond à un point d'ancrage pour la station mobile (MS).

14. Système selon l'une quelconque des revendications 9 à 13, appliqué dans un système GPRS, dans lequel le premier routeur (SGSN1) et/ou le second routeur (SGSN2) correspondent à un noeud SGSN.

15. Système selon l'une quelconque des revendications 9 à 13, appliqué dans un réseau local sans fil, WLAN, dans lequel le premier routeur ou le second routeur correspond à un agent domestique ou à un noeud GGSN.

16. Système selon la revendication 14, dans lequel la condition « lorsqu'un contact a été établi entre la station mobile (MS) et le second routeur (SGSN2) » est occasionnée par un transfert intercellulaire entre noeuds SGSN.
